Europäisches Patentamt

(19) European Patent Office

Office européen des brevets

(11) Numéro de publication: **0 283 366**
**A1**

## (12) DEMANDE DE BREVET EUROPEEN

(21) Numéro de dépôt: **88400473.0**

(22) Date de dépôt: **01.03.88**

(51) Int. Cl.⁴: **B 23 Q 3/157**

(30) Priorité: **06.03.87 FR 8703035**

(43) Date de publication de la demande:
**21.09.88 Bulletin 88/38**

(84) Etats contractants désignés: **DE ES GB IT SE**

(71) Demandeur: **RENAULT AUTOMATION**
**8/10 avenue Emile Zola**
**F-92109 Boulogne-Billancourt (FR)**

(72) Inventeur: **Boone, Raymond**
**22, rue Léon Martine Rés. "La Briaude" Bât. D1**
**F-92290 Chatenay Malabry (FR)**

**Leguy, Bernard**
**14, rue Marcel Pagnol Le Haut Buc**
**F-78530 Buc (FR)**

**Poncel, Michel**
**Rue de la Champagne**
**F-28410 Boutigny (FR)**

**Segura, Didier**
**10, rue Roger Salengro**
**F-94240 L'Hay Les Roses (FR)**

**Leroy, Bernard**
**9, Allée des Ormeaux**
**F-92160 Antony (FR)**

(74) Mandataire: **Saint Martin, René et al**
**Régie Nationale des Usines Renault Direction des**
**Recherches et Développements Service 0804 8-10,**
**Avenue Emile-Zola**
**F-92109 Boulogne Billancourt Cedex (FR)**

(54) Unite mono-axe à commande numérique, notamment pour machine transfert et atelier flexible.

(57) Suivant l'invention, cette unité mono-axe comprend :
- une unité d'avance (2) suivant un axe (Z),
- une équerre (3) incorporant un tourne-broche (4), sur laquelle viennent se fixer différents outillages (9),
- un magasin rotatif (6) d'outillages interchangeables, fixe, enjambant cette unité d'avance,
cet ensemble pouvant être disposé sur un socle ou un bâti (0).
**Application** : notamment aux machines transfert et ateliers flexibles.

FIG.1

Bundesdruckerei Berlin

**Description**

## UNITE MONO-AXE A COMMANDE NUMERIQUE, NOTAMMENT POUR MACHINE TRANSFERT ET ATELIER FLEXIBLE

La présente invention se rapporte à une unité mono-axe à commande numérique pour la réalisation d'opérations variables, en nombre limité, sur des pièces usinées en transfert ou en ateliers flexibles notamment.

Cette unité permet :
- un échange d'outillages d'usinage ou de contrôle, monobroche ou multibroches, dans le cycle ;
- un échange des outils usés ou cassés, ou des outillages pour changement de rafales, à l'arrière de l'unité.

Cette unité peut s'inscrire dans n pas d'une machine transfert ou être autonome. De plus, sa modularité permet un investissement progressif.

Suivant une particularité essentielle de l'invention, cette unité mono-axe à commande numérique comprend une unité d'avance suivant l'axe Z, une équerre incorporant le tourne-broche, sur laquelle viennent se fixer différents outillages et un magasin rotatif d'outillages interchangeables, fixe, enjambant l'unité d'avance, cet ensemble pouvant être disposé sur un socle ou un bâti intégrant un porte-pièce ou non.

Suivant une autre particularité de l'invention, c'est pendant le mouvement de fin de retour de la table qu'est provoqué mécaniquement le décrochage de l'outillage de l'équerre et l'accrochage de celui-ci dans le magasin.

Suivant une autre particularité de l'invention, l'outillage est maintenu dans le magasin par deux guidages :
- un rectiligne pour sortir l'outillage radialement du magasin,
- un circulaire pour maintenir celui-ci en place pendant la rotation du magasin.

D'autres particularités de l'invention ressortiront plus clairement avec les avantages en découlant, à la lecture de la description qui suit d'un mode de réalisation préféré, donné à titre d'exemple non limitatif, en référence aux dessins annexés, dans lesquels :

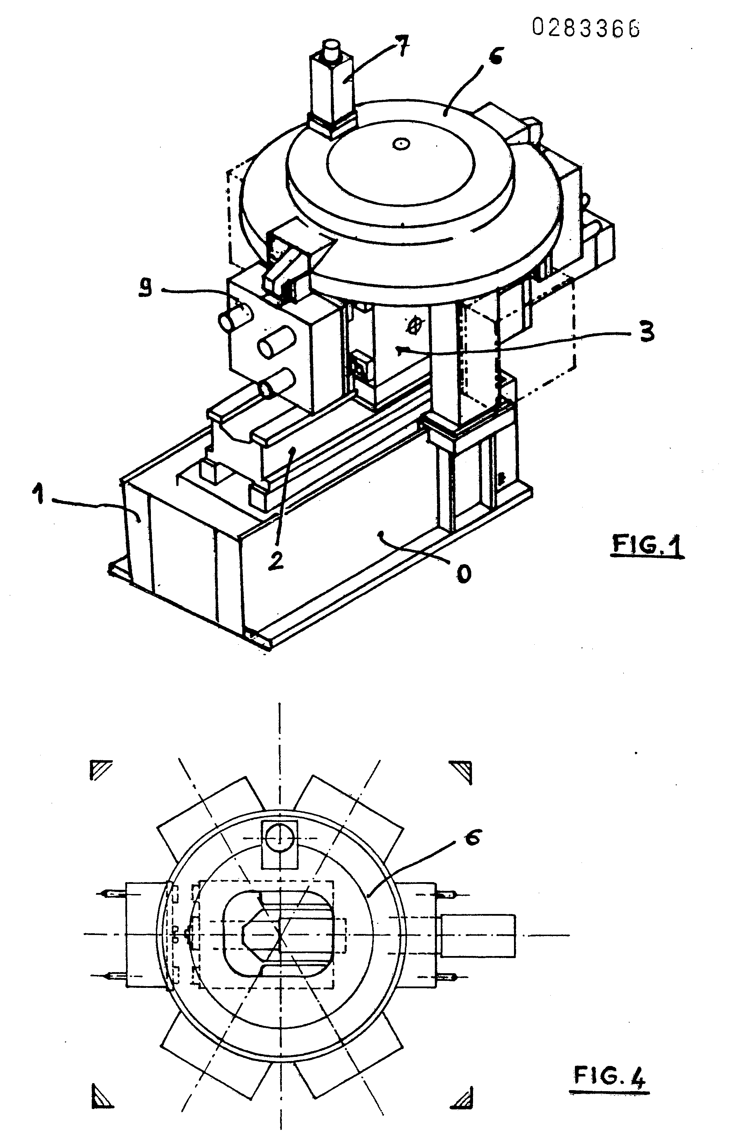

- la figure 1 représente une vue en perspective d'une unité conforme à l'invention, pourvue d'un magasin changeur d'outils,

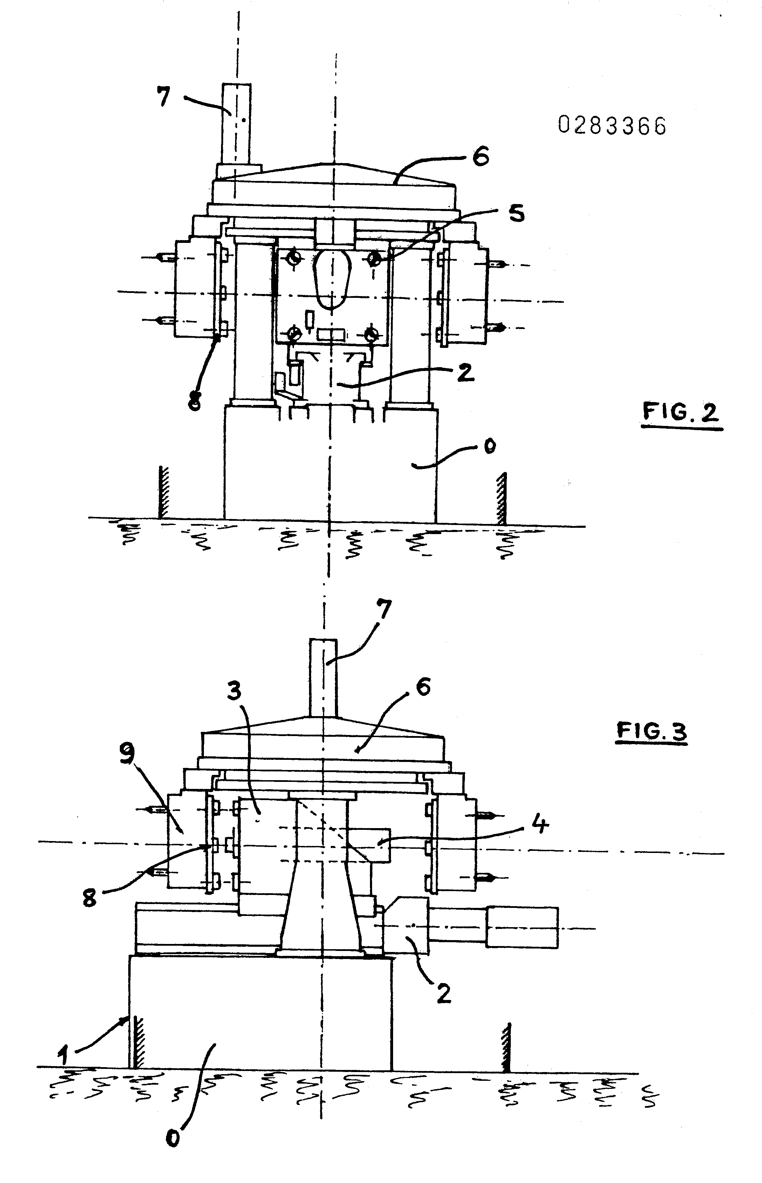

- et les figures 2, 3 et 4 représentent respectivement des vues avant, de profil et de dessus de cette unité.

Sur cette figure, l'architecture du module de base constituant cette unité mono-axe Z présente un bâti 0 pourvu d'une face d'accouplement verticale 1.

Sur ce bâti est montée une unité d'avance Z référencée à commande numérique. L'entraînement est assuré par un servo-moteur électrique et un couple de pignons. Les déplacements sont contrôlés par un système incrémental ou absolu.

Sur cette table est fixée une équerre 3 incluant le tourne-broche 4. La commande de rotation est réalisée par un servo-moteur avec ou sans réducteur et le contrôle angulaire par un système incrémental ou absolu. La continuité du mouvement avec un outillage 9 est assurée positivement. Le positionnement parfait de l'outillage sur l'équerre est obtenu par quatre Vés 5 disposés en croix, insensibles aux problèmes dus à la dilatation thermique. L'accrochage de ces outillages est assuré par quatre pinces de préhension, des ressorts exerçant la force de bridage. Quatre leviers de débridage, disposés à l'intérieur de l'équerre, provoquent, en venant au contact de cames fixes, l'ouverture des pinces.

Le magasin rotatif 6 est fixe et enjambe l'unité d'avance. La rotation est réalisée par une couronne d'orientation et un servo-moteur 7 engrenant avec celle-ci au travers d'un réducteur. Un codeur monté à l'arrière du moteur permet de contrôler les différentes positions du magasin. La partie centrale du magasin est fixe et les différents outillages sont accrochés sur la partie rotative de celui-ci. A chaque emplacement prévu, un guide en Té sert à l'accrochage de l'outillage. L'immobilisation radiale est assurée grâce à un guidage circulaire. Un levier solidaire de la partie fixe du magasin assure la mise en vitesse relative de l'outillage par rapport à l'équerre (loi de mouvement optimale pour l'accostage) et la reconstitution du guidage circulaire.

Chaque outillage porte sur le dessus un chariot qui vient en place dans le guide en Té du magasin. La liaison avec l'équerre est faite par une plaque de base 8 portant le positionnement par Vés. Un système de raccordement automatique permet d'amener les fluides au niveau de l'outillage.

Le pilotage est réalisé par commande numérique à calculateur CNC.

Le changement d'outillage se déroule de la façon suivante :

Pendant le mouvement de fin de retour de la table d'avance :
- le chariot de l'outillage s'introduit dans le guide en Té du magasin,
- les leviers de débridage prenant appui sur les cames fixes du magasin s'opposent à l'action des ressorts de bridage ouvrant les pinces de préhension,
- simultanément à ces actions, un galet solidaire de l'équerre entre dans une rainure en forme de came, contenue dans le levier du magasin, provoquant la mise en mouvement relatif de l'outillage par rapport à l'équerre ; en fin d'évolution, les pistes circulaires sont reconstituées autorisant la rotation du magasin. Cela permet de piloter la vitesse relative de l'outillage par rapport au magasin, la table d'avance ayant une vitesse relativement grande,
- la rotation du magasin par le chemin le plus court permet la présentation d'un autre outillage face à l'équerre,
- l'avance de la table provoque le cycle inverse.

Les avantages obtenus avec cette unité mono-axe précédemment décrite se révèlent particulièrement importants :
- le positionnement des outillages sur l'équerre est très précis et insensible aux problèmes dus à la dilatation thermique ;

- les outillages sont accessibles à l'arrière de la machine pour des opérations de réglage ou de changement d'outils ;

- une partie arrière du guidage circulaire du magasin est éclipsable permettant l'extraction ou l'injection de nouveaux outillages ;

- l'ensemble mobile d'usinage représente une masse minimale, ce qui autorise des accélérations élevées, donc des temps de positionnement en Z courts ;

- l'absence de séquentiel due à l'enchaînement ou/et la simultanéité des différentes fonctions liées cinématiquement permet un changement d'outillages extrêmement rapide ;

- les fluides peuvent être amenés au niveau des outillages permettant une utilisation spécifique à chacun d'entre eux.

**Revendications**

**1/** Unité mono-axe à commande numérique, notamment pour machine transfert et atelier flexible, caractérisée en ce qu'elle comprend :
- une unité d'avance (2) suivant un axe (Z),
- une équerre (3) incorporant un tourne-broche (4), sur laquelle viennent se fixer différents outillages (9),
- un magasin rotatif (6) d'outillages interchangeables, fixe, enjambant cette unité d'avance, cet ensemble pouvant être disposé sur un socle ou un bâti (0) intégrant un porte-pièce ou non.

**2/** Unité mono-axe suivant la revendication 1, caractérisée en ce que c'est pendant le mouvement de fin de retour de la table d'avance qu'est provoqué mécaniquement le décrochage de l'outillage de l'équerre et l'accrochage de celui-ci dans le magasin.

**3/** Unité mono-axe suivant l'une quelconque des revendications 1 et 2, caractérisée en ce que le positionnement parfait de l'outillage sur l'équerre est assuré par quatre Vés disposés en croix.

**4/** Unité mono-axe suivant l'une quelconque des revendications 1, 2 et 3, caractérisée en ce que le bridage de l'outillage sur l'équerre est assuré par quatre pinces de préhension, la force de bridage étant donnée par des ressorts alors que quatre leviers disposés à l'intérieur de l'équerre provoquent, en venant au contact de cames fixes, l'ouverture des pinces.

**5/** Unité mono-axe suivant l'une quelconque des revendications 1 à 4, caractérisée en ce que l'accrochage des outillages dans le magasin s'effectue grâce à un chariot venant se glisser dans un guide en Té solidaire du magasin, l'immobilisation radiale étant assurée par un guidage circulaire.

**6/** Unité mono-axe suivant l'une quelconque des revendications 1 à 5, caractérisée en ce que la vitesse d'accostage de l'outillage dans le magasin est pilotée au moyen d'un système à levier et cames.

0283366

FIG. 1

FIG. 4

0283366

FIG. 2

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 193 465  (RENAULT AUTOMATION) * En entier * | 1,2,4 | B 23 Q    3/157 |
| A |  | 5,6 | |
| X | BE-A- 874 891  (HONDA GIKEN KOGYO) * Pages 3-10; figures 1-6 * | 1,2,4 | |
| A | | 3,5,6 | |
| X | FR-A-2 555 485  (HONDA GIKEN KOGYO) * Pages 9-11; figures * | 1,2,4 | |
| A | | 3,5,6 | |
| X | SOVIET INVENTIONS ILLUSTRATED, semaine 8517, sections: Générale/Mécanique, accession no. 85-104223/17, 5 juin 1985, Derwent Publications Ltd, Londres, GB; & SU-A-1 119 820 (E.G. SULIMOV) 23-10-1984 * Figures * | 1,2,4 | |
| A | Idem | 3,5,6 | DOMAINES TECHNIQUES RECHERCHES (Int. Cl.4) |
| X | FR-A-2 090 375  (MAN) * Pages 4,5; figures * | 1,2 | B 23 Q |
| A | | 3-6 | |
| A | SOVIET INVENTIONS ILLUSTRATED, semaine 8515, sections: Générale/Mécanique, accession no. 85-092272/15, 22 mai 1985, Derwent Publications Ltd, Londres, GB; & SU-A-1 117 181 (MINSK MACH CONS) 07-10-1984 * Figures * -/- | 3,4 | |

Le présent rapport a été établi pour toutes les revendications

| Lieu de la recherche | Date d'achèvement de la recherche | Examinateur |
|---|---|---|
| LA HAYE | 14-06-1988 | ROSENBAUM H.F.J. |

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-1 102 862  (JONES)<br>* Pages 2-5; figures 1-6 *<br>----- | 5 | |

DOMAINES TECHNIQUES
RECHERCHES (Int. Cl.4)

Le présent rapport a été établi pour toutes les revendications

| Lieu de la recherche | Date d'achèvement de la recherche | Examinateur |
|---|---|---|
| LA HAYE | 14-06-1988 | ROSENBAUM H.F.J. |